(19) **Europäisches Patentamt / European Patent Office / Office européen des brevets**

(11) **EP 4 352 117 B1**

(12) **FASCICULE DE BREVET EUROPEEN**

(45) Date de publication et mention de la délivrance du brevet:
**02.07.2025 Bulletin 2025/27**

(21) Numéro de dépôt: **22734022.1**

(22) Date de dépôt: **30.05.2022**

(51) Classification Internationale des Brevets (IPC):
**C08F 4/54** *(2006.01)*     **C08F 136/06** *(2006.01)*
**C08F 4/649** *(2006.01)*

(52) Classification Coopérative des Brevets (CPC):
(C-Sets disponibles)
**C08F 136/06**     (Cont.)

(86) Numéro de dépôt international:
**PCT/FR2022/051026**

(87) Numéro de publication internationale:
**WO 2022/258908 (15.12.2022 Gazette 2022/50)**

(54) **SYSTÈME CATALYTIQUE POUR LA POLYMÉRISATION STÉRÉOSPÉCIFIQUE DE DIÈNES ET LEUR UTILISATION EN PROCÉDÉ DE SYNTHÈSE DE POLYMÈRES DIÉNIQUES**

KATALYSATORSYSTEM FÜR DIE STEREOSPEZIFISCHE POLYMERISATION VON DIENEN UND VERWENDUNG DAVON IN EINEM VERFAHREN ZUR SYNTHESE VON DIENPOLYMEREN

CATALYTIC SYSTEM FOR THE STEREOSPECIFIC POLYMERIZATION OF DIENES AND USE THEREOF IN A PROCESS FOR SYNTHESIZING DIENE POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106143**

(43) Date de publication de la demande:
**17.04.2024 Bulletin 2024/16**

(73) Titulaire: **COMPAGNIE GENERALE DES ETABLISSEMENTS MICHELIN**
**63000 Clermont-Ferrand (FR)**

(72) Inventeurs:
- **PEHLIVAN, Leyla**
  **63040 CLERMONT-FERRAND Cedex 9 (FR)**
- **PINEL, Stéphanie**
  **63040 CLERMONT-FERRAND Cedex 9 (FR)**
- **GEORGE, Philip-Christopher**
  **63040 CLERMONT-FERRAND Cedex 9 (FR)**
- **RAY, Mélanie**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 304 088**     **WO-A1-2010/069511**

- **ZHANG ET AL: "Copolymerization of butadiene with styrene using a rare-earth metal compound - dialkylmagnesium - halocarbon catalytic system", 25 January 2002 (2002-01-25), pages 208 - 212, XP055904265, Retrieved from the Internet <URL:https://onlinelibrary.wiley.com/doi/10.1002/pi.822> [retrieved on 20220322]**

(52) Classification Coopérative des Brevets (CPC):
(Cont.)

C-Sets
**C08F 136/06, C08F 4/545;**
**C08F 136/06, C08F 4/6492**

## Description

### Domaine technique

La présente invention concerne un système catalytique pour la polymérisation stéréospécifique de diènes conjugués favorisant l'insertion 1,4-trans des monomères. L'invention concerne plus particulièrement un système catalytique polymétallique pour la polymérisation stéréospécifique de diènes conjugués favorisant l'insertion 1,4-trans des monomères. L'invention concerne également un procédé de synthèse de polymères diéniques à fort taux de d'enchainement 1,4-trans utilisant un système catalytique polymétallique pour la polymérisation des monomères.

### Technique antérieure

L'utilisation de systèmes catalytiques polymétalliques pour la synthèse de polymères diéniques par polymérisation de coordination a été décrite par le passé.

La littérature rapporte notamment la combinaison de composés organiques de terres rares et de composés organiques de magnésium pour la polymérisation de monomères 1,3-diènes susceptible de générer une stéréospécificité des configurations 1,4-cis ou 1,4-trans, et en particulier de configuration 1,4-trans.

Ainsi, par exemple, l'article Macromolecules 2017, 50, 7887-7894, *"Regulation of the cis-1,4- and trans-1,4-Polybutadiene Multiblock Copolymers via Chain Shuttling Polymerization Using a Ternary Neodymium Organic Sulfonate Catalyst"*, Quanquan Dai et al., décrit la synthèse de polybutadiènes permettant de réguler le rapport des taux de 1,4-cis et 1,4-trans pour atteindre un équilibre entre la tolérance à la déformation (attribuée à la partie cis-1,4 du polybutadiène) et la rigidité (attribuée à la cristallinité de la partie trans-1,4-du polybutadiène). Cet article explique qu'un système catalytique binaire à base de trifluorométhane sulfonate de néodyme et de dibutylmagnésium permet de synthétiser par catalyse de coordination un polybutadiène en favorisant l'insertion 1,4-trans du butadiène.

Plusieurs publications rapportent, quant à elles, la polymérisation contrôlée d'isoprène à l'aide de système catalytique comprenant un borohydrure de néodyme et un dialkylmagnésium, en présence ou non de tétrahydrofurane. Ces systèmes catalytiques permettent de fournir du polyisoprène stéréorégulier avec de forts taux de 1,4-trans. On peut par exemple citer Macromolecules 2005, 38, 3162-3169 "Highly trans-Stereospecific Isoprene Polymerization by Neodymium Borohydrido Catalysts", Fanny Bonnet et al**.**

La publication dans "Polymer International", 51:208-212 (2002) de Zhang Q. et al. traite de la copolymérisation de butadiène avec du styrène en présence d'un composé de métal rare et d'un dialkylmagnésium.

Un autre document EP0091287, décrit un système catalytique pour la polymérisation du butadiène comprenant notamment du versatate de didyme et un dibutylmagnésium permettant d'atteindre du polybutadiène stéréospécifique à fort taux de 1,4-trans.

Si des systèmes catalytiques employés dans les polymérisations stéréospécifiques des diènes conjugués ont déjà été décrits par le passé, un besoin demeure de disposer d'autres procédés de synthèse de polymères diéniques présentant notamment des taux d'enchainement 1,4-trans élevé, c'est-à-dire supérieur à 65% en poids par rapport à la partie diénique du polymère.

Par ailleurs, dans certaines utilisations d'un polymère diénique, il peut être avantageux que celui-ci ait non seulement un taux d'enchainement 1,4-trans élevé, mais encore un taux d'enchaînement 1,2 limité. Un procédé de synthèse de polymères diéniques permettant de donner satisfaction à ces deux objectifs à la fois serait particulièrement intéressant.

### Exposé de l'invention

Le problème technique qui se pose dans le cadre de la présente invention est de disposer d'un procédé de synthèse de polymères diéniques, particulièrement de polymères du butadiène, favorisant la formation des enchainements 1,4-trans, et permettant également de limiter la formation des enchaînements 1,2.

L'invention permet de résoudre ce problème en proposant un système catalytique associant un organophosphate de néodyme, un composé organique de magnésium et un dérivé allylique d'un métal alcalin, qui, utilisé pour la polymérisation de 1,3-diènes présente une stéréospécificité vis-à-vis de l'insertion 1,4-trans en maintenant une conversion de la réaction de polymérisation satisfaisante.

L'utilisation du système catalytique selon l'invention dans un procédé de synthèse d'un polymère diénique permet d'obtenir des polymères diéniques, notamment des polybutadiènes, présentant des taux d'enchainement 1,4-trans élevés, avec des valeurs d'au moins 65% en poids par rapport à la partie diénique du polymère, et un taux d'enchaînement 1,2- faible, notamment avec des valeurs inférieures ou égales à 10% en poids par rapport à la partie diénique du polymère Plus particulièrement, l'utilisation du système catalytique selon l'invention permet dans un procédé de polymérisation du butadiène, la synthèse d'un polybutadiène présentant les caractéristiques suivantes :

- un taux d'enchaînement 1,4-trans d'au moins 65% en poids par rapport à la partie diénique du polybutadiène;
- un taux d'enchaînement vinyle 1,2- inférieur ou égal à 10% en poids par rapport à la partie diénique du polybutadiène.

Dans un premier aspect, l'invention porte sur un tel système catalytique.

Dans un autre aspect, l'invention porte sur un procédé de synthèse d'un polymère diénique utilisant un tel système catalytique.

**Résumé de l'invention**

L'invention, décrite plus en détails ci-après, a pour objet au moins l'une des réalisations énumérées aux points suivants :

1- Système catalytique à base d'au moins

- un sel d'un acide phosphorique organique de néodyme,
- un composé organique de magnésium de formule $R^1R^2Mg$ , dans laquelle $R^1$ et $R^2$ représentent, indépendamment l'un de l'autre, un radical aliphatique en $C_1$-$C_{10}$, substitué ou non, un radical aromatique en $C_6$-$C_{20}$, substitué ou non,
- un dérivé allylique d'un métal alcalin de formule RM, dans laquelle M désigne un métal alcalin et R représente un groupe allylique.

2- Système catalytique selon la réalisation précédente dans lequel le radical aliphatique, dans la définition de $R^1$ et $R^2$ est un radical alkyle en $C_1$-$C_{10}$, substitué ou non.

3- Système catalytique selon la réalisation précédente dans lequel le radical aliphatique, dans la définition de $R^1$ et $R^2$ est un radical alkyle en $C_1$-$C_{10}$ choisi parmi un radical méthyle, éthyle, les radicaux propyles, butyles, pentyles, hexyles, heptyles, octyles, nonyles et décyles.

4- Système catalytique selon l'une quelconque des réalisations précédentes dans lequel le composé organique de magnésium de formule $R^1R^2Mg$ est le n-butyléthylmagnésium ou le n-butyloctylmagnésium.

5- Système catalytique selon la réalisation 1 dans lequel le radical aromatique, dans la définition de $R^1$ et $R^2$ est un radical aryle en $C_6$-$C_{20}$, substitué ou non.

6- Système catalytique selon l'une quelconque des réalisations précédentes dans lequel le groupe allylique définissant R est un dérivé d'un mono-alcène ou d'un diène allylique ayant perdu un atome d'hydrogène et ayant au moins 4 atomes de carbone, de préférence un butadiényle.

7- Système catalytique selon l'une quelconque des réalisations 1 à 5 dans lequel le groupe allylique définissant R est radical oligodiényle.

8- Système catalytique selon la réalisation précédente dans lequel le radical oligodiényle comprend au moins deux unités issues d'un monomère diène.

9- Système catalytique selon la réalisation précédente dans lequel, le radical oligodiényle comprend un nombre moyen d'unités issues d'un monomère diène variant de 2 à 100.

10- Système catalytique selon l'une quelconque des réalisations 7 à 9 dans lequel, dans le radical oligodiényle, le monomère diène est choisi parmi les monomères diènes conjugués, de préférence le butadiène et l'isoprène et leurs mélanges.

11- Système catalytique selon l'une quelconque des réalisations précédentes dans lequel le groupe allylique R est choisi dans le groupe constitué par les dérivés oligobutadiényles ayant un nombre moyen d'unités issues de butadiène de 2 à 100 et oligoisoprényles ayant un nombre moyen d'unités issues d'isoprène de 2 à 100, de préférence R est un dérivé oligobutadiényle ayant un nombre moyen d'unités issues de butadiène de 2 à 100.

12- Système catalytique selon l'une quelconque des réalisations précédentes dans lequel le métal alcalin M définissant le dérivé allylique de formule RM est le lithium.

13- Système catalytique selon l'une quelconque des réalisations précédentes dans lequel le dérivé allylique de formule RM est un oligodiényllithium, de préférence un oligobutadiényllithium

14- Système catalytique selon l'une quelconque des réalisations précédentes dans lequel le sel de néodyme d'un acide phosphorique organique est un tris(organophosphate) de néodyme.

15- Système catalytique selon l'une quelconque des réalisations précédentes dans lequel le sel d'un acide phosphorique organique est choisi parmi les diesters d'acide phosphorique.

16- Système catalytique selon l'une quelconque des réalisations précédentes dans lequel le sel de néodyme d'un acide phosphorique organique est le tris[bis (2-éthylhexyl) phosphate] de néodyme.

17- Système catalytique selon l'une quelconque des réalisations précédentes dans lequel le rapport molaire ($R^1R^2Mg$ / néodyme) a une valeur d'au plus 15/1, de préférence d'au plus 12/1, de préférence encore d'au plus 10/1, de préférence encore strictement inférieur à 10/1.

18- Système catalytique selon l'une quelconque des réalisations précédentes dans lequel le rapport molaire ($R^1R^2Mg$ / néodyme) a une valeur d'au moins 1/2, de préférence d'au moins 1/1.

19- Système catalytique selon l'une quelconque des réalisations précédentes dans lequel le rapport molaire (dérivé allylique d'un métal alcalin / néodyme) présente une valeur comprise entre 1/2 et 20/1, avantageusement allant de 1/1 à 10/1, de préférence strictement supérieure à 1/1 et strictement inférieure à 10/1.

20- Système catalytique selon l'une quelconque des réalisations précédentes dans lequel au moins une des caractéristiques suivantes est respectée, au moins deux, au moins trois, au moins quatre, au moins cinq et de préférence toutes :

- le dérivé allylique d'un métal alcalin est un dérivé allylique de lithium,
- le radical allylique est un radical oligodiényle, de préférence un oligobutadiényle,
- le sel de néodyme est un diester d'acide phosphorique de néodyme, de préférence le tris [bis (2-éthylhexyl) phosphate] de néodyme,
- le composé organique de magnésium est un dialkylmagnésium, chacun des radicaux alkyles étant en $C_1$-$C_{10}$, substitué ou non, de préférence le n-butyléthylmagnésium ou le n-butyloctylmagnésium,
- le rapport molaire ($R^1R^2Mg$ / néodyme) présente une valeur d'au plus 15/1, de préférence d'au plus 12/1, de préférence encore d'au plus 10/1, de préférence encore strictement inférieur à 10/1,
- le rapport molaire (dérivé allylique d'un métal alcalin / néodyme) présente une valeur comprise entre 1/2 et 20/1, avantageusement allant de 1/1 à 10/1, de préférence strictement supérieure à 1/1 et strictement inférieure à 10/1.

21- Système catalytique selon l'une quelconque des réalisations précédentes dans lequel au moins une des caractéristiques suivantes est respectée, au moins deux, au moins trois, au moins quatre et de préférence toutes :

- le dérivé allylique d'un métal alcalin est un oligobutadiényllithium ayant un nombre moyen d'unités issues de diène de 2 à 100,
- le sel de néodyme est le tris [bis (2-éthylhexyl) phosphate] de néodyme,
- le composé organique de magnésium est le n-butyléthylmagnésium ou le n-butyloctylmagnésium
- le rapport molaire ($R^1R^2Mg$ / néodyme) présente une valeur d'au plus 15/1, de préférence d'au plus 12/1, de préférence encore d'au plus 10/1, de préférence encore strictement inférieure à 10/1,
- le rapport molaire (dérivé allylique d'un métal alcalin / néodyme) présente une valeur comprise entre 1/2 et 20/1, avantageusement allant de 1/1 à 10/1, de préférence strictement supérieure à 1/1 et strictement inférieure à 10/1.

22- Procédé de préparation d'un polymère diénique comprenant la réaction de polymérisation d'au moins un monomère diène conjugué dans un réacteur en présence d'un système catalytique tel que défini dans l'une des réalisations précédentes.

23- Procédé selon la réalisations 22 comprenant, de manière décalée à l'introduction du système catalytique de polymérisation dans le réacteur, l'ajout dans le réacteur d'au moins un composé organique de magnésium de formule $R^3R^4Mg$, dans laquelle chacun de $R^3$ et $R^4$ représente, indépendamment l'un de l'autre, un radical aliphatique en $C_1$-$C_{10}$, substitué ou non, un radical aromatique en $C_6$-$C_{20}$, substitué ou non.

24- Procédé selon la réalisation précédente dans lequel le rapport molaire (composés organiques de magnésium / néodyme) est d'au plus 15/1, de préférence d'au plus 12/1, de préférence encore d'au plus 10/1, de préférence encore strictement inférieure à 10/1, la quantité molaire de composés organiques de magnésium étant la somme des quantités molaires des composés de magnésium $R^1R^2Mg$ et $R^3R^4Mg$.

25- Procédé selon l'une quelconques des réalisations 22 à 24 dans lequel le monomère diène conjugué à polymériser est un monomère 1,3-diène.

26- Procédé selon la réalisation précédente dans lequel le monomère diène conjugué à polymériser est un monomère 1,3-diène ayant 4 à 15 atomes de carbone, de préférence le 1,3-butadiène ou l'isoprène, plus particulièrement le 1,3-butadiène.

27- Procédé selon l'une quelconque des réalisations précédentes 22 à 26 dans lequel le monomère diène conjugué à polymériser est copolymérisé avec au moins un autre monomère.

28- Procédé selon la réalisation précédente dans lequel le monomère diène conjugué à polymériser est copolymérisé avec au moins un autre monomère choisi parmi les monomères diènes conjugués ayant 4 à 15 atomes de carbone.

29- Procédé selon la réalisation 27 ou 28 dans lequel le monomère diène conjugué à polymériser est copolymérisé avec au moins un autre monomère choisi parmi les composés vinylaromatiques, de préférence le styrène.

30 - Procédé selon l'une quelconque des réalisations précédentes 22 à 29 dans lequel au moins une des caractéristiques suivantes est respectées, au moins deux, au moins trois, au moins quatre, au moins cinq, au moins six et de préférence toutes :

- le monomère diène conjugué à polymériser est un 1,3-diène ayant 4 à 15 atomes de carbone, de préférence le 1,3-butadiène,
- un composé organique de magnésium de formule $R^3R^4Mg$, de préférence le n-butyléthylmagnésium ou le n-butyloctylmagnésium, est ajouté dans le réacteur indépendamment et de manière décalée du système catalytique selon un rapport molaire (composés organiques de magnésium / néodyme) est d'au plus 15/1, de préférence d'au plus 12/1, de préférence encore d'au plus 10/1, de préférence encore strictement inférieure à 10/1, la quantité molaire de composés organiques de magnésium étant la somme des quantités molaires des composés de magnésium $R^1R^2Mg$ et $R^3R^4Mg$,
- le sel d'acide phosphorique organique de néodyme du système catalytique est un diester d'acide phosphorique de néodyme, de préférence le tris [bis (2-éthylhexyl) phosphate] de néodyme,
- le dérivé allylique d'un métal alcalin est un oligodiényllithium, de préférence un oligobutadiényllithium, ayant un nombre moyen d'unités issues de diène de 2 à 100,
- le composé organique de magnésium $R^1R^2Mg$ du système catalytique est un dialkylmagnésium, chacun des radicaux alkyles étant en $C_1$-$C_{10}$, substitué ou non, de préférence le n-butyléthylmagnésium ou le n-butyloctylmagnésium,
- dans le système catalytique le rapport molaire ($R^1R^2Mg$ / néodyme) présente une valeur d'au plus 15/1, de préférence d'au plus 12/1, de préférence encore d'au plus 10/1, de préférence encore strictement inférieure à 10/1,
- dans le système catalytique le rapport molaire (dérivé allylique d'un métal alcalin / néodyme) présente une valeur allant de 1/1 à 10/1, de préférence strictement supérieure à 1/1 et strictement inférieure à 10/1.

**Définition**

Les termes "radical", "groupe" et "groupement", au singulier ou au pluriel, sont équivalents et interchangeables.

L'expression "en $C_x$-$C_y$" pour un radical hydrocarboné signifie que ledit radical comprend x à y atomes de carbone.

Dans la présente description, sauf indication expresse différente, tous les pourcentages (%) indiqués sont des pourcentages (%) en poids (aussi nommé pourcentage (%) massique). Les pourcentages (%) exprimant la microstructure du polymère diénique (par exemple la répartition relative des unités butadiène 1,2-, 1,4-trans et 1,4-cis) sont des pourcentages en poids par rapport à la partie diénique du polymère. Ainsi un taux d'enchaînement 1,4-trans de plus de 70% dans un polymère diénique correspond à un taux d'unité diènes 1,4-trans de plus de 70% en poids par rapport au poids de la partie diénique du polymère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression "à base de" utilisée pour définir les constituants du système catalytique, on entend le mélange de ces constituants et/ou le produit de la réaction entre ces constituants.

Les composés mentionnés dans la description comprenant du carbone peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés plus particulièrement dans la présente demande notamment les monomères.

Ainsi, par exemple le butadiène peut être avantageusement issu de manière connue directement de la biomasse ou être obtenu à partir d'un précurseur biosourcé, par exemple l'éthanol biosourcé. L'isoprène peut être avantageusement issu de manière connue directement de la biomasse ou être obtenu à partir d'un précurseur biosourcé, par exemple à partir d'isobutène biosourcé. Le styrène peut par exemple avantageusement être issu de manière connue directement de la biomasse ou encore du recyclage de polystyrène.

## Description détaillée de l'invention

L'invention a pour objet un système catalytique à base d'au moins

- un sel de néodyme d'un acide phosphorique organique,
- un composé organique de magnésium de formule $R^1R^2Mg$ , dans laquelle $R^1$ et $R^2$ représentent, indépendamment l'un de l'autre, un radical aliphatique en $C_1$-$C_{10}$, substitué ou non, un radical aromatique en $C_6$-$C_{20}$, substitué ou non, et
- un dérivé allylique d'un métal alcalin de formule RM, dans laquelle M désigne un métal alcalin et R représente un groupe allylique.

Le système catalytique selon l'invention est à base d'au moins un sel de néodyme d'un acide phosphorique organique. Le sel d'acide phosphorique organique de néodyme est avantageusement un tris(organophosphate) de néodyme, l'organophosphate pouvant être choisi parmi les diesters d'acide phosphorique de formule générale (R'O) (R"O)PO(OH), dans laquelle R' et R", identiques ou différents, représentent un radical alkyle en $C_1$-$C_{10}$ ou un radical aryle en $C_6$-$C_{20}$. A titre d'exemple on peut citer un tris [dibutyl phosphate] de néodyme, un tris [dipentyl phosphate] de néodyme, un tris [dioctyl phosphate] de néodyme, un tris [bis (2-éthylhexyl) phosphate] de néodyme, un tris [bis (1-méthylheptyl) phosphate] de néodyme, un tris [bis (p-nonylphenyl) phosphate] de néodyme, un tris [butyl (2-éthylhexyl) phosphate] de néodyme, un tris [(1-méthylheptyl) (2-éthylhexyl) phosphate] de néodyme, un tris [(2-éthylhexyl) (p-nonylphényl) phosphate] de néodyme, un tris [bis (2-éthylhexyl) phosphate] de néodyme, un tris[bis(oléyllyl) phosphate] de néodyme ou un tris[bis(linéolyl) phosphate] de néodyme.

Selon des modes de réalisation de l'invention, le sel d'acide phosphorique organique de néodyme est un tris [bis (2-éthylhexyl) phosphate] de néodyme.

Le sel de néodyme peut être sous forme d'une poudre, d'une solution dans un solvant hydrocarboné inerte, d'une suspension dans un solvant hydrocarboné inerte ou alors d'un gel dans un solvant hydrocarboné inerte.

Le système catalytique selon l'invention est également à base d'au moins un composé organique de magnésium de formule $R^1R^2Mg$

Dans la formule $R^1R^2Mg$, $R^1$ et $R^2$ peuvent être identiques ou différents.

Dans la formule $R^1R^2Mg$, chacun de $R^1$ et $R^2$ peut être un radical aliphatique en $C_1$-$C_{40}$, substitué ou non. A titre de radical aliphatique représentant $R^1$ et $R^2$, on peut citer les groupements alkyles en $C_1$-$C_{10}$, alcényles en $C_2$-$C_{10}$ et les groupements alcynyles en $C_2$-$C_{10}$, qu'ils soient cycliques ou non cycliques. Particulièrement, lorsque l'un de $R^1$ et $R^2$ est un radical aliphatique, il est un radical alkyle en $C_1$-$C_{10}$ non cyclique choisi parmi le radical méthyle, éthyle, les radicaux propyles, butyles, pentyles, hexyles, heptyles, octyles, nonyles et décyles.

Dans la formule $R^1R^2Mg$, chacun de $R^1$ et $R^2$ peut être un radical aromatique en $C_6$-$C_{20}$, substitué ou non. A titre de radical aromatique représentant chacun de $R^1$ et $R^2$, on peut citer les groupements aryles en $C_6$-$C_{20}$.

Par radical aliphatique substitué ou radical aromatique substitué, on entend un radical substitué par un ou plusieurs groupements hydrocarbonés ayant de 1 à 10 atomes de carbone, par exemple choisis parmi les alkyles en $C_1$-$C_{10}$, les aralkyles en $C_7$-$C_{12}$, les alcényles en $C_2$-$C_{10}$ et les alcynyles en $C_2$-$C_{10}$.

Selon des modes de réalisation particuliers de l'invention, dans la formule $R^1R^2Mg$, $R^1$ et $R^2$ désignent chacun un radical alkyle en $C_1$-$C_{10}$ non cyclique. Selon ce mode de réalisation le composé organique de magnésium de formule $R^1R^2Mg$ est le n-butyléthylmagnésium ou le n-butyloctylmagnésium.

Selon des modes de réalisation particulier de l'invention, le rapport molaire ($R^1R^2Mg$ / néodyme) dans ledit

système catalytique a une valeur d'au moins 1/2, de préférence d'au moins 1/1. Il n'y a pas de valeur maximale à ce rapport qui soit liée au taux d'enchainement 1,4-trans à atteindre. Néanmoins, afin que l'atteinte d'un taux élevé d'enchainement 1,4-trans supérieur à 65% en poids par rapport à la partie diénique du polymère ne se fasse pas au détriment du taux d'enchainement 1,2-, le rapport molaire ($R^1R^2Mg$ / néodyme) dans ledit système catalytique est de préférence d'au plus 15/1. De préférence le rapport molaire ($R^1R^2Mg$ / néodyme) est d'au plus 12/1, de préférence encore d'au plus 10/1, de préférence encore strictement inférieure à 10/1, pour maintenir un taux d'enchaînement 1,2 inférieur à 10% en poids par rapport à la partie diénique du polymère.

Par ailleurs, en vue de maintenir une optimisation de la conversion, le rapport molaire ($R^1R^2Mg$ / néodyme) dans ledit système catalytique a avantageusement une valeur d'au moins 1/1, voire de préférence d'au moins 2/1. Également, en vue de maintenir une optimisation de la conversion, le rapport molaire ($R^1R^2Mg$ / néodyme) dans ledit système catalytique a avantageusement une valeur d'au plus 12/1. Ainsi, selon des modes de réalisation avantageux de l'invention, le rapport molaire ($R^1R^2Mg$ / néodyme) dans ledit système catalytique a une valeur d'au moins 1/1, de préférence d'au moins 2/1, et d'au plus 12/1, de préférence d'au plus 10/1, plus préférentiellement strictement inférieure à 10/1.

Le système catalytique selon l'invention est à base également d'au moins un dérivé allylique d'un métal alcalin répondant à la formule RM, dans laquelle M est un métal alcalin R est un groupe allylique.

Selon des modes de réalisation de l'invention, R peut être un radical issu d'un mono-alcène ou d'un diène allylique ayant perdu un atome d'hydrogène et comprenant au moins 4 atomes de carbone et de préférence au plus 10 atomes de carbone. Selon ces modes de réalisation, R est de préférence un radical butadiényle.

Selon d'autres modes de réalisation de l'invention, R peut être un radical oligodiényle. Ces modes de réalisation sont préférés en vue notamment d'optimiser les conditions opératoires de la polymérisation de diènes avec un bon taux de conversion. On entend tout particulièrement par radical oligodiényle, un radical issu d'un polymère d'au moins un monomère diénique présentant une masse molaire moyenne en nombre d'au plus 6 000 g/mol. La masse molaire moyenne en nombre visée est déterminée de manière bien connue à partir d'une équation qui relie la Mn visée, la masse de monomère converti en polymère en gramme et le nombre de moles d'amorceur et qui s'exprime comme : Mn visée= masse de monomère converti/moles d'amorceur.

Le radical oligodiényle est le radical issu d'un polymère par la perte d'un atome d'hydrogène. Un tel polymère peut être un homopolymère d'un monomère diène, particulièrement un monomère diène conjugué, notamment tout homopolymère obtenu par polymérisation d'un monomère diène conjugué ayant de 4 à 12 atomes de carbone. A titre de diènes conjugués conviennent notamment le butadiène, l'isoprène, les 2,3-di (alkyle en $C_1$ à $C_3$) 1,3-butadiènes et leurs mélanges, de préférence le butadiène. Un tel polymère peut également être un copolymère obtenu par copolymérisation d'un ou plusieurs monomères diènes entre eux ou avec un ou plusieurs monomères éthyléniquement insaturés. A titre de monomères éthyléniquement insaturés conviennent notamment les composés vinyles aromatiques ayant de 8 à 20 atomes de carbone, plus particulière le styrène. Selon l'invention, le nombre moyen d'unités de ces oligomères peut varier de 2 à 100.

Ainsi, dans certains modes de réalisation de l'invention, le groupe allylique R est un radical oligodiényle choisi parmi les groupes oligobutadiényles et oligoisoprényles, le nombre moyen d'unités de ces oligomères pouvant varier de 2 à 100. De préférence, selon ces modes de réalisation, le groupe allylique R est un groupe oligobutadiényle comprenant de préférence un nombre moyen d'unités butadiène variant de 2 à 100, de préférence encore de 5 à 100.

Dans la formule RM, le métal alcalin M est K, Li ou Na. Il est de préférence Li.

Selon des modes de réalisation particuliers de l'invention, le dérivé allylique d'un métal alcalin de formule RM, est un oligodiényllithium, préférentiellement un oligobutadiényllithium comprenant de préférence un nombre moyen d'unités butadiène variant de 2 à 100, plus préférentiellement de 5 à 100.

Le dérivé allylique d'un métal alcalin, lorsqu'il est un oligodiényle de métal alcalin, peut être obtenu de manière connue par la polymérisation anionique d'au moins un monomère diénique initiée par un composé organique d'un métal alcalin M.

Selon des modes de réalisation de l'invention, le rapport molaire (dérivé allylique d'un métal alcalin / néodyme) dans ledit système catalytique présente avantageusement une valeur allant de 1/2 à 20/1, de préférence allant de 1/1 à 10/1, plus préférentiellement encore strictement supérieure à 1/1 et strictement inférieure à 10/1.

Selon l'un quelconque des modes de réalisation de l'invention, le système catalytique comprend de préférence un solvant hydrocarboné. Le système catalytique peut se présenter sous la forme d'une solution lorsqu'il est en présence d'un solvant hydrocarboné. Le solvant hydrocarboné peut être un solvant hydrocarboné aliphatique de bas poids moléculaire, tel que par exemple le cyclohexane, le méthylcyclohexane, le n-heptane, ou un mélange de ces solvants, ou encore dans un solvant aromatique tel que le toluène. Il convient de noter que les solvants non-aromatiques sont particulièrement préférés. Le solvant hydrocarboné est de préférence aliphatique, de manière plus préférentielle le méthylcyclohexane.

L'homme du métier comprendra que les modes de réalisation de l'invention mentionnés ci-dessus sont combinables entre eux dans tous leurs aspects particuliers et préférentiels, pour autant qu'ils soient compatibles.

Notamment, les caractéristiques concernant la nature des composants du système catalytique et les rapports molaires ($R^1R^2Mg$ / néodyme) et (dérivé allylique d'un métal alcalin / néodyme) sont combinables.

Ainsi selon certains modes de réalisation particuliers du système catalytique de l'invention, au moins une des caractéristiques suivantes est respectée, au moins deux, au moins trois, au moins quatre, au moins cinq et de préférence toutes :

- le dérivé allylique d'un métal alcalin est un dérivé allylique de lithium,
- le radical allylique est un radical oligodiényle, de préférence un oligobutadiényle, ayant de 2 à 100 unités issues de diène,
- le sel de néodyme est un diester d'acide phosphorique de néodyme, de préférence le tris [bis (2-éthylhexyl) phosphate] de néodyme,
- le composé organique de magnésium est un dialkylmagnésium, chacun des radicaux alkyles étant en $C_1$-$C_{10}$, substitué ou non, de préférence le n-butyléthylmagnésium ou le n-butyloctylmagnésium,
- le rapport molaire ($R^1R^2Mg$ / néodyme) présente une valeur d'au plus 15/1, de préférence d'au plus 12/1, , de préférence d'au plus 10/1, plus préférentiellement strictement inférieure à 10/1,
- le rapport molaire (dérivé allylique d'un métal alcalin / néodyme) présente une valeur allant de 1/2 à 20/1, avantageusement de 1/1 à 10/1, plus préférentiellement encore strictement supérieure à 1/1 et strictement inférieure à 10/1.

Plus particulièrement encore selon ces modes de réalisation, au moins une des caractéristiques suivantes est respectées, au moins deux, au moins trois, au moins quatre et de préférence toutes :

- le dérivé allylique d'un métal alcalin est un oligobutadiényllithium, ayant 2 à 100 unités issues de butadiène,
- le sel de néodyme est le tris [bis (2-éthylhexyl) phosphate] de néodyme,
- le composé organique de magnésium est le n-butyléthylmagnésium ou le n-butyloctylmagnésium,
- le rapport molaire ($R^1R^2Mg$ / néodyme) présente une valeur d'au plus 12/1, de préférence d'au plus 10/1, plus préférentiellement strictement inférieure à 10/1,
- le rapport molaire (dérivé allylique d'un métal alcalin / néodyme) présente une valeur allant de 1/1 à 10/1, plus préférentiellement encore strictement supérieure à 1/1 et strictement inférieure à 10/1. Un procédé de préparation d'un système catalytique tel que défini précédemment fait également l'objet de la présente invention.

Le procédé de préparation du système catalytique comprend la mise en contact simultanée ou séquentielle du sel d'un acide phosphorique organique de néodyme, du composé organique de magnésium et du dérivé allylique d'un métal alcalin.

La mise en contact des différents composants, par deux ou par trois, peut être réalisée à une température comprise entre 15 et 100°C, et pendant 3 à 120 minutes.

Le sel organique d'un acide phosphorique de néodyme peut se présenter sous forme d'une poudre, d'une solution dans un solvant hydrocarboné inerte, d'une suspension dans un solvant hydrocarboné inerte ou alors d'un gel dans un solvant hydrocarboné inerte.

Selon des modes de réalisation du procédé conforme à l'invention, le dérivé allylique de métal alcalin et le composé organique de magnésium sont mis en contact préalablement leur ajout au sel organique de néodyme en suspension, en solution ou sous forme de gel. Selon d'autres modes de réalisation du procédé conforme à l'invention, le dérivé allylique de métal alcalin, le composé organique de magnésium et le sel organique de néodyme, en suspension, en solution ou sous forme de gel, sont mis en contact concomitamment.

Selon une variante du procédé conforme à l'invention, le système catalytique est préformé antérieurement à son introduction dans le milieu de polymérisation, c'est-à-dire par mise en contact des différents constituants catalytiques, suivie d'un vieillissement des constituants catalytiques avant l'utilisation en polymérisation, optionnellement en présence d'un diène conjugué de préformation. Avant d'être utilisé par exemple en polymérisation, le système catalytique ainsi obtenu en solution peut être stocké sous atmosphère inerte, par exemple sous azote ou argon, notamment à une température allant de -20°C à la température ambiante (23°C).

Selon une autre variante du procédé conforme à l'invention, le système catalytique est formé *in situ,* c'est-à-dire que tous les constituants catalytiques, à savoir le sel de néodyme, le dérivé allylique du métal alcalin et le composé organique de magnésium sont introduits simultanément ou séquentiellement dans le réacteur juste avant polymérisation dans le milieu de polymérisation.

Le système catalytique selon l'invention peut être avantageusement utilisé dans un procédé de synthèse d'un polymère diénique, lequel procédé fait également l'objet de la présente invention. En effet, il s'avère que le système catalytique selon l'invention, utilisé dans un tel procédé, favorise l'insertion 1,4-trans de monomères diènes conjugués permettant ainsi d'obtenir des polymères diéniques présentant un taux d'enchainement 1,4-trans élevé, tout en limitant l'insertion 1,2- des monomères. Le procédé de synthèse utilisant un système catalytique selon l'invention permet notamment l'obtention de polymères du butadiène présentant un taux élevé d'enchaînement 1,4-trans supérieur ou égal à 65% en poids par rapport à la partie diénique du polymère, ainsi qu'un faible taux d'enchaînement 1,2- inférieur ou égal à 10% en poids par rapport à la partie diénique du polymère.

L'invention a donc également pour objet un procédé de synthèse d'un polymère diénique comprenant une étape de polymérisation d'au moins un monomère diène conjugué en présence d'un système catalytique tel que décrit plus haut.

Selon l'invention le monomère diène conjugué à polymériser est tout particulièrement un monomère 1,3-diène. A titre de monomère 1,3-diène conforme à l'invention, on peut citer tout particulièrement un monomère 1,3-diène ayant 4 à 15 atomes de carbone.

A titre de monomère 1,3-diène convient notamment le butadiène, l'isoprène, les 2,3-di(alkyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, ou tout autre monomère 1,3-diène ayant 4 à 12 atomes de carbone.

A titre de monomère 1,3-diène convient également tout terpène linéaire tel que notamment un monoterpène ($C_{10}H_{16}$) linéaire, comme le myrcène, un sesquiterpène ($C_{15}H_{24}$) linéaire, comme le farnésène etc....

Selon certains modes de réalisation de l'invention, le monomère diène conjugué est le 1,3-butadiène ou l'isoprène, avantageusement le 1,3-butadiène.

Selon certains modes de réalisation de l'invention, l'étape de polymérisation du procédé est une étape de d'homopolymérisation d'un monomère diène conjugué en présence d'un système catalytique tel que décrit plus haut.

Selon certains modes de réalisation de l'invention, l'étape de polymérisation du procédé est une étape de copolymérisation d'au moins un monomère diène conjugué en présence d'un système catalytique tel que décrit plus haut. Le monomère diène conjugué est alors copolymérisé avec au moins un autre monomère.

A titre d'un autre monomère convient notamment un monomère diène conjugué ayant 4 à 15 atomes de carbone tel que défini plus haut, différent du premier monomère diène conjugué. A titre de monomère diène conjugué convient notamment le 1,3-butadiène, le 2-méthyl-1,3-butadiène (ou isoprène), les 2,3-di (alkyle en $C_1$ à $C_5$) 1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène, ou tout autre diène conjugué ayant entre 4 et 12 atomes de carbone. A titre de monomère diène conjugué, on peut également citer les monomères diènes conjugués terpéniques non cyclique, plus particulièrement un farnésène ou le myrcène.

A titre d'un autre monomère convient également un composé vinylaromatique. A titre de monomère vinyliques aromatique on peut citer un monomère vinylaromatiques ayant de 8 à 20 atomes de carbone, comme par exemple le styrène, l'ortho-, méta-, para-méthylstyrène, le 2,4,6-triméthylstyrène, le divinylbenzène et le vinylnaphtalène, de préférence le monomère vinylaromatique est le styrène.

L'étape de polymérisation peut être effectuée de manière connue, en continu ou en discontinu, en masse ou en solution, généralement et de manière connue à une température comprise d'au moins 40°C et de préférence d'au plus 120°C, plus préférentiellement d'au plus 100°C.

L'étape de polymérisation peut être effectuée dans un solvant organique classiquement utilisé pour la polymérisation de monomères diéniques. Par solvant organique, on entend selon l'invention un solvant hydrocarboné inerte qui peut être par exemple un hydrocarbure aliphatique ou alicyclique comme le pentane, l'hexane, l'heptane, l'iso-octane, le cyclohexane, le méthylcyclohexane, ou un hydrocarbure aromatique comme le benzène, le toluène, le xylène, ou les mélanges de ces solvants. Il convient de noter que les solvants non-aromatiques sont particulièrement préférés.

Le système catalytique tel que décrit plus haut selon tous ses modes de réalisation est introduit dans un réacteur et utilisé pour la polymérisation dans un milieu réactionnel comprenant les monomères à polymériser et, le cas échéant, le solvant de polymérisation.

Selon certains modes de réalisation de l'invention, le système catalytique est utilisé selon des proportions variant de 20 à 2000 μmol de métal de terre rare pour 100g de monomères, de préférence de 20 à 1000 μmol, encore plus préférentiellement de 50 à 1000 μmol.

Selon certains modes de réalisation de l'invention, l'étape de polymérisation du procédé est précédée d'addition d'une quantité prédéterminée d'un composé organique de magnésium de formule $R^3R^4Mg$, directement dans le milieu réactionnel, indépendamment de l'introduction du système catalytique utilisé pour la réaction de polymérisation et de manière décalée du système catalytique. C'est-à-dire que l'adjonction se fait dans le milieu de polymérisation pas en même temps et, par conséquent, soit avant, soit après, soit en partie avant et en partie après, de préférence avant, par rapport à l'introduction du système catalytique utilisé pour catalyser la réaction de polymérisation. L'adjonction se fait de préférence avant l'introduction des monomères.

On notera que l'ajout du composé organique de magnésium de formule $R^3R^4Mg$ avant le système catalytique préformé permet notamment de minimiser la dispersion des caractéristiques de l'élastomère obtenu notamment des masses moléculaires.

Avantageusement, la quantité de composé organique de magnésium de formule $R^3R^4Mg$ est telle que le rapport molaire (composés organiques de magnésium /néodyme) est de préférence au plus 15/1, plus préférentiellement d'au plus 12/1, encore de préférence d'au plus 10/1, voire strictement inférieure à 10/1. Il faut comprendre ici par quantité molaire de composés organiques de magnésium la quantité molaire totale de composés de magnésium, soit la somme de la quantité molaire de composé de magnésium $R^3R^4Mg$ et de la quantité molaire de composé de magnésium $R^1R^2Mg$ du système catalytique.

Le composé organique de magnésium de formule $R^3R^4Mg$ peut-être identique ou différent du composé organique de magnésium de formule $R^1R^2Mg$ du système catalytique.

Dans la formule $R^3R^4Mg$, chacun de $R^3$ et $R^4$ représente, indépendamment l'un de l'autre, un radical aliphatique en $C_1$-$C_{10}$, substitué ou non, un radical aromatique en $C_6$-$C_{20}$, substitué ou non. Les radicaux aliphatiques et aromatiques sont définis plus haut en rapport avec $R^1$ et $R^2$. Plus particulièrement chacun de $R^3$ et $R^4$ est un radical alkyle en $C_1$-$C_{10}$ non cyclique choisi parmi un radical méthyle, éthyle, les radicaux propyles, butyles, pentyles, hexyles, heptyles, octyles, nonyles et décyles.

Selon ces modes de réalisation de l'invention, le composé organique de magnésium de formule $R^3R^4Mg$ est de préférence le n-butyléthylmagnésium ou le n-butyloctylmagnésium.

Selon certains modes de réalisation particuliers du procédé de synthèse d'un polymère diénique selon l'invention, au moins une des caractéristiques suivantes est respectées, au moins deux, au moins trois, au moins quatre, au moins cinq et de préférence toutes :

- le monomère diène conjugué à polymériser est un monomère 1,3-diène ayant 4 à 15 atomes de carbone, de préférence le 1,3-butadiène,
- le sel d'acide phosphorique organique de néodyme du système catalytique est un diester d'acide phosphorique de néodyme, de préférence le tris [bis (2-éthylhexyl) phosphate] de néodyme,
- le dérivé allylique d'un métal alcalin est un oligodiényllithium, de préférence un oligobutadiényllithium, ayant un nombre moyen d'unités issues de diène de 2 à 100,
- le composé organique de magnésium du système catalytique est un dialkylmagnésium, chacun des radicaux alkyles étant en $C_1$-$C_{10}$, substitué ou non, de préférence le n-butyléthylmagnésium ou le n-butyloctylmagnésium,
- le rapport molaire ($R^1R^2Mg$ / néodyme) présente une valeur d'au plus 15/1, de préférence d'au plus 12/1, de préférence encore d'au plus 10/1, voire strictement inférieure à 10/1,
- le rapport molaire (dérivé allylique d'un métal alcalin / néodyme) présente une valeur allant de 1/2 à 20/1, avantageusement de 1/1 à 10/1, de préférence encore strictement supérieure à 1/1 et strictement inférieure à 10/1.

A ces caractéristiques du procédé de synthèse d'un polymère diénique selon l'invention peut s'ajouter l'addition d'une quantité prédéterminée d'un composé organique de magnésium de formule $R^3R^4Mg$ telle que décrite plus haut.

Ainsi, certains modes de réalisation particuliers du procédé de synthèse d'un polymère diénique selon l'invention, au moins une des caractéristiques suivantes est respectées, au moins deux, au moins trois, au moins quatre, au moins cinq, au moins six et de préférence toutes :

- le monomère diène conjugué est le 1,3-butadiène,
- le sel d'acide phosphorique organique de néodyme du système catalytique est un diester d'acide phosphorique de néodyme, de préférence le tris [bis (2-éthylhexyl) phosphate] de néodyme,
- le dérivé allylique d'un métal alcalin est un oligodiényllithium, de préférence un oligobutadiényllithium, ayant un nombre moyen d'unités issues de diène de 2 à 100,
- le composé organique de magnésium du système catalytique est un dialkylmagnésium, chacun des radicaux alkyles étant en $C_1$-$C_{10}$, substitué ou non, de préférence le n-butyléthylmagnésium ou le n-butyloctylmagnésium,
- dans le système catalytique le rapport molaire ($R^1R^2Mg$ / néodyme) présente une valeur d'au plus 15/1, avantageusement d'au plus 12/1, de préférence encore d'au plus 10/1, voire strictement inférieure à 10/1,
- dans le système catalytique le rapport molaire (dérivé allylique d'un métal alcalin / néodyme) présente une valeur allant de 1/2 à 20/1, avantageusement de 1/1 à 10/1, de préférence encore strictement supérieure à 1/1 et strictement inférieure à 10/1
- un composé organique de magnésium $R^3R^4Mg$, chacun de $R^3$ et $R^4$ représente, indépendamment l'un de l'autre, un radical aliphatique en $C_1$-$C_{10}$, substitué ou non, un radical aromatique en $C_6$-$C_{20}$, substitué ou non, de préférence le n-butyléthylmagnésium ou le n-butyloctylmagnésium, est ajouté au milieu de polymérisation indépendamment et de manière décalée du système catalytique selon un taux tel que le rapport molaire (composés organiques de magnésium /néodyme) inférieur à 15/1, avantageusement d'au plus 12/1, de préférence encore d'au plus 10/1, voire strictement inférieure à 10/1, la quantité molaire de composés organiques de magnésium étant la somme de la quantité molaire de $R^3R^4Mg$ et de la quantité molaire de $R^1R^2Mg$.

A l'issue de l'étape de polymérisation, le procédé de synthèse d'un polymère diénique selon l'invention peut être poursuivi de manière connue en soi. Ainsi, dans certains modes de réalisation, la polymérisation peut être stoppée, éventuellement après une étape de modification post-polymérisation du polymère diénique.

Le procédé se poursuit ensuite de manière connue en soi par la séparation et récupération du polymère diénique préparé. Les monomères n'ayant pas réagi peuvent être éliminés selon des méthodes connues de l'homme du métier, tout comme le solvant.

Les caractéristiques précitées de la présente invention, ainsi que d'autres, seront mieux comprises à la lecture de la description suivante de plusieurs exemples de réalisation de l'invention, donnés à titre indicatif.

**Exemples**

**Mesures et tests utilisés**

**Spectroscopie proche infrarouge (NIR):**

La microstructure des élastomères est caractérisée par la technique de spectroscopie proche infrarouge (NIR).

La spectroscopie proche infrarouge (NIR) est utilisée pour déterminer quantitativement la microstructure de l'élastomère (répartition relative des unités butadiène 1,2, 1,4-trans et 1,4 cis). Le principe de la méthode repose sur la loi de Beer-Lambert généralisée à un système multi composants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN [13]C. La microstructure est alors calculée à partir du spectre NIR d'un film d'élastomère d'environ 750 $\mu$m d'épaisseur. L'acquisition du spectre est réalisée en mode transmission entre 7800 et 3900 cm[-1] avec une résolution de 2 cm[-1], à l'aide d'un spectromètre proche infrarouge à transformée de Fourier équipé d'un détecteur InGaAs refroidi par effet Peltier.

**Conversion** :

La conversion est calculée en via le rapport entre la masse du polymère isolé à la fin de la réaction et la masse de butadiène introduite dans le réacteur.

$$C = \frac{m_{polybutadiène}}{m_{butadiène}} . 100$$

$m_{butadiène}$ qui représente la masse de butadiène introduite dans le réacteur,

$M_{polybutadiène}$ qui représente la masse de polybutadiène obtenu.

Les exemples qui suivent visent à montrer le grand intérêt du système catalytique selon l'invention pour la polymérisation de monomère 1,3-diène, notamment en favorisant les enchainements 1,4-trans tout en permettant une conversion élevée. Les exemples qui suivent visent également à montrer le caractère significatif et surprenant de cet effet technique plus particulièrement en comparaison à un système catalytique ne comprenant pas de dérivé allylique d'un métal alcalin mais à la place un composé alkyllithium utilisé dans l'état de l'art.

**Procédé de synthèse des systèmes catalytiques** :

Deux solutions sont préparées séparément :

Solution 1 : Dans une bouteille steinie scellée inertée sous balayage d'azote sont introduits le solvant méthylcyclohexane dégazé et du tris [bis (2-éthylhexyl) phosphate] de néodyme en poudre (la concentration de Nd dans le système catalytique est de 0.009 mol/L). La bouteille est agitée à température ambiante durant 16h.

Solution 2 : Dans une bouteille steinie scellée inertée sous balayage d'azote sont introduits le solvant méthylcyclohexane dégazé et du butadiène. Du butyllithium est injecté, le milieu réactionnel est chauffé à 60°C durant 60 minutes et le butadiène est polymérisé pour former un oligobutadiényllithium de Mn 2000 g/mol visée (PBLi). Puis du butylethylmagnésium en solution dans du methylcyclohexane est ajouté à cette solution (Mg/Nd=5). Le système catalytique est utilisé directement (système catalytique C1) ou placé à température ambiante sous agitation pendant une durée de 30 minutes de contact (système catalytique C2).

La totalité de la solution 2 est injectée dans la solution 1. Le milieu réactionnel est ensuite chauffé à 30°C sous agitation durant 60 minutes.

Les caractéristiques des systèmes catalytiques sont rappelées dans le tableau 1:

Tableau 1

| Système catalytique | PBLi/Nd | Mg/Nd | Durée de contact PBLi-$R_1R_2$Mg (minutes) |
|---|---|---|---|
| C0 | 0 | 5 | 0 |
| C1 | 5 | 5 | 0 |
| C2 | 5 | 5 | 30 |
| C3 | 5* | 5 | 30 |
| C4 | 1 | 5 | 30 |
| C5 | 10 | 5 | 30 |
| * BuLi | | | |

**Procédé de synthèse des polymères du butadiène** :

**Exemple de synthèse de polybutadiène avec les systèmes catalytiques conformes à l'invention**

Dans une bouteille steinie scellée inertée sous balayage d'azote sont introduits le solvant méthylcyclohexane dégazé, du butylethylmagnésium (selon le taux indiqué dans le tableau) en solution dans le methylcyclohexane puis le butadiène (9.5g). Le rapport massique solvant / butadiène est de 6.9/1 pour tous les essais. Les quantités des réactifs sont mentionnées dans le tableau ci-dessous. Le système catalytique CX est ensuite introduit dans le milieu réactionnel selon une quantité de 400 $\mu$mol Nd/100g monomère. Le milieu réactionnel est chauffé à la température indiquée. Après quelques heures, la réaction est stoppée à l'aide de méthanol (1 mL) et une mesure de conversion est réalisée. La solution est ensuite anti oxydée et mise à sécher sous étuve.

Tableau 2

| Exemples | Système catalytique | T° polymérisation | Mg ajouté*/Nd | Temps de polymérisation (min) | Conv (%) | %Trans | %cis | %1,2 |
|---|---|---|---|---|---|---|---|---|
| 1 | C0 | 90 | 0.5 | 150 | 7 | nd | nd | nd |
| 2 | C1 | 90 | 0.5 | 75 | 85 | 69 | 24 | 7 |
| 3 | C1 | 90 | 0.5 | 120 | 86 | 69 | 24 | 7 |
| 4 | C1 | 75 | 0.5 | 80 | 64 | 80 | 15 | 5 |
| 5 | C1 | 75 | 0.5 | 145 | 77 | 80 | 15 | 5 |
| 6 | C1 | 50 | 0.5 | 240 | 59 | 86 | 11 | 3 |
| 7 | C1 | 50 | 0.5 | 360 | 72 | 88 | 9 | 3 |
| 8 | C2 | 90 | 0.5 | 75 | 82 | 70 | 23 | 7 |
| 9 | C2 | 90 | 0.5 | 120 | 86 | 70 | 23 | 7 |
| 10 | C3 | 90 | 0.5 | 150 | 47 | 64 | 28 | 8 |
| 11 | C4 | 90 | 0.5 | 150 | 13 | nd | nd | nd |
| 12 | C5 | 90 | 0.5 | 150 | 95 | 61 | 28 | 11 |
| 13 | C2 | 90 | 5 | 150 | 42 | 57 | 27 | 16 |
| 14 | C2 | 90 | 10 | 150 | 31 | nd | nd | nd |

*"Mg ajouté" étant le composé organique de magnésium de formule $R^3R^4$Mg ajouté ici avant le système catalytique
"nd" : la quantité de produit obtenu n'est pas suffisante pour effectuer la mesure de la microstructure

A la lecture des résultats, on constate que les systèmes catalytiques conformes à l'invention permettent de polymériser le butadiène en favorisant une insertion des monomères en position 1,4-trans.

On constate qu'on obtient des polybutadiènes présentant un taux d'enchaînement 1,4- trans élevé notamment supérieur à 65% en poids.

Les polybutadiènes obtenus possèdent des taux de trans élevés, notamment supérieurs à 65% en poids, et un taux d'enchainement 1,2- limité, inférieur à 10% en poids, ce qui diminue leur cristallinité.

De plus, on observe qu'à 90°C, un rapport PBLi/Nd supérieur à 1/1 et inférieur à 10/1, permet l'obtention avec une conversion acceptable de polybutadiènes présentant un taux d'enchaînement 1,4- trans élevé et un taux limité d'enchainement 1,2- (essais 9, 11 et 12).

On observe également qu'à 90°C, qu'un rapport $Mg_{total}$/Nd supérieur ou égal à 10/1 conduit à une diminution de la conversion et une dégradation de la microstructure à fort taux d'enchainement 1,4-trans, car ce taux diminue au profit de la formation d'enchaînement 1,2- (essais 9, 13 et 14). $Mg_{total}$ est la somme des quantités molaires des composés de magnésium utilisés lors de la synthèse du système catalytique et ajouté avant le système catalytique dans le milieu de polymérisation ($R^3R^4Mg$).

## Revendications

1. Système catalytique à base d'au moins

   - un sel d'un acide phosphorique organique de néodyme,
   - un composé organique de magnésium de formule $R^1R^2Mg$ , dans laquelle chacun de $R^1$ et $R^2$ représente, indépendamment l'un de l'autre, un radical aliphatique en $C_1$-$C_{10}$, substitué ou non, ou un radical aromatique en $C_6$-$C_{20}$, substitué ou non, et
   - un dérivé allylique d'un métal alcalin de formule RM, dans laquelle M désigne un métal alcalin et R représente un groupe allylique.

2. Système catalytique selon la revendication 1, **caractérisé en ce que** le radical aliphatique, dans la définition de $R^1$ et $R^2$ est un radical alkyle en $C_1$-$C_{10}$, substitué ou non.

3. Système catalytique selon l'une quelconque des revendications précédentes, **caractérisé en ce que** le composé organique de magnésium de formule $R^1R^2Mg$ est le n-butyléthylmagnésium ou n-butyloctylmagnésium.

4. Système catalytique selon l'une quelconque des revendications précédentes **caractérisé en ce que** dans le dérivé allylique de formule RM, le groupe allylique définissant R est un radical oligodiényle, de préférence un radical oligobutadiényle.

5. Système catalytique selon l'une quelconque des revendications précédentes **caractérisé en ce que** dans le dérivé allylique de formule RM, M désigne le lithium.

6. Système catalytique selon l'une quelconque des revendications précédentes **caractérisé en ce que** le sel d'un acide phosphorique organique de néodyme est un tris(organophosphate) de néodyme.

7. Système catalytique selon l'une quelconque des revendications précédentes **caractérisé en ce que** le sel d'un acide phosphorique organique de néodyme est le tris [bis (2-éthylhexyl) phosphate] de néodyme.

8. Système catalytique selon l'une quelconque des revendications précédentes **caractérisé en ce que** le rapport molaire (composé organique de magnésium / néodyme) a une valeur d'au plus 15/1, de préférence d'au plus 12/1 de préférence d'au plus 10/1, de préférence encore strictement inférieur à 10/1.

9. Système catalytique selon l'une quelconque des revendications précédentes **caractérisé en ce que** le rapport molaire (dérivé allylique d'un métal alcalin / néodyme) présente une valeur comprise entre 1/2 et 20/1, avantageusement allant de 1/1 à 10/1, de préférence strictement supérieur à 1/1 et strictement inférieure 10/1.

10. Système catalytique selon l'une quelconque des revendications précédentes **caractérisé en ce qu'** au moins une des caractéristiques suivantes est respectées, au moins deux, au moins trois, au moins quatre, au moins cinq et de préférence toutes :

**14**

- le dérivé allylique d'un métal alcalin est un dérivé allylique de lithium,
- le radical allylique est un radical oligodiényle, de préférence un oligobutadiényle, ayant de 2 à 100 unités issues de diène,
- le sel de néodyme est un diester d'acide phosphorique de néodyme, de préférence le tris [bis (2-éthylhexyl) phosphate] de néodyme,
- le composé organique de magnésium est un dialkylmagnésium, chacun des radicaux alkyles étant en $C_1$-$C_{10}$, substitué ou non, de préférence le n-butyléthylmagnésium ou le n-butyloctylmagnésium,
- le rapport molaire (composé organique de magnésium / néodyme) présente une valeur d'au plus 15/1, de préférence d'au plus 12/1, de préférence encore d'au plus 10/1, de préférence encore strictement inférieur à 10/1,
- le rapport molaire (dérivé allylique d'un métal alcalin / néodyme) présente une valeur allant de 1/2 à 20/1, avantageusement de 1/1 à 10/1, de préférence strictement supérieure à 1/1 et strictement inférieure 10/1.

11. Procédé de préparation d'un polymère diénique comprenant la réaction de polymérisation d'au moins un monomère diène conjugué dans un réacteur en présence d'un système catalytique tel que défini dans l'une quelconque des revendications précédentes.

12. Procédé selon la revendication 11 comprenant, de manière décalée à l'introduction du système catalytique de polymérisation dans le réacteur, l'ajout dans le réacteur d'au moins un composé organique de magnésium de formule $R^3R^4Mg$, dans laquelle chacun de $R^3$ et $R^4$ représente, indépendamment l'un de l'autre, un radical aliphatique en $C_1$-$C_{10}$, substitué ou non, ou un radical aromatique en $C_6$-$C_{20}$, substitué ou non.

13. Procédé selon la revendication 12 **caractérisé en ce que** le rapport molaire (composés organiques de magnésium / néodyme) est d'au plus 15/1, de préférence d'au plus 12/1, de préférence d'au plus 10/1, de préférence encore strictement inférieure à 10/1, la quantité molaire de composé organique de magnésium étant la somme des quantités molaires des composés de magnésium $R^1R^2Mg$ et $R^3R^4Mg$.

14. Procédé selon l'une quelconques des revendications 11 à 13 **caractérisé en ce que** le monomère diène conjugué à polymériser est un monomère 1,3-diène ayant 4 à 15 atomes de carbone, de préférence le 1,3-butadiène.

15. Procédé selon l'une quelconque des revendication 11 à 14 dans lequel au moins une des caractéristiques suivantes est respectées, au moins deux, au moins trois, au moins quatre, au moins cinq, au moins six et de préférence toutes :

- le monomère diène conjugué est un monomère 1,3-diène ayant 4 à 15 atomes de carbone, de préférence le 1,3-butadiène,
- le sel d'acide phosphorique organique de néodyme du système catalytique est un diester d'acide phosphorique de néodyme, de préférence le tris [bis (2-éthylhexyl) phosphate] de néodyme,
- le dérivé allylique d'un métal alcalin du système catalytique est un oligodiényllithium, de préférence un oligobutadiényllithium, ayant de préférence 2 à 100 unités issues de butadiène,
- le composé organique de magnésium de formule $R^1R^2Mg$ du système catalytique est un dialkylmagnésium, chacun des radicaux alkyles étant en $C_1$-$C_{10}$, substitué ou non, de préférence le n-butyléthylmagnésium ou le n-butyloctylmagnésium,
- dans le système catalytique le rapport molaire ($R^1R^2Mg$ / néodyme) présente une valeur d'au plus 15/1, de préférence d'au plus 12/1, de préférence d'au plus 10/1, de préférence encore strictement inférieure à 10/1,
- dans le système catalytique le rapport molaire (dérivé allylique d'un métal alcalin / néodyme) présente une valeur allant de 1/1 à 10/1, de préférence strictement supérieure à 1/1 et strictement inférieure 10/1
- un composé organique de magnésium $R^3R^4Mg$, dans laquelle chacun de $R^3$ et $R^4$ représente, indépendamment l'un de l'autre, un radical aliphatique en $C_1$-$C_{10}$, substitué ou non, un radical aromatique en $C_6$-$C_{20}$, substitué ou non, de préférence le n-butyléthylmagnésium ou le n-butyloctylmagnésium, est ajouté dans le réacteur indépendamment du système catalytique, sous réserve que le rapport molaire (composés organiques de magnésium /néodyme) est d'au plus 15/1, de préférence d'au plus 12/1, de préférence d'au plus 10/1, de préférence encore strictement inférieure à 10/1, la quantité molaire de composés organiques de magnésium étant la somme des quantités molaires des composés de magnésium $R^1R^2Mg$ et $R^3R^4Mg$.

**Patentansprüche**

1. Katalytisches System auf Basis von mindestens

- einem Neodymsalz einer organischen Phosphorsäure,
- einer organischen Magnesiumverbindung der Formel $R^1R^2Mg$, in der $R^1$ und $R^2$ jeweils unabhängig voneinander für einen substituierten oder unsubstituierten aliphatischen $C_1$-$C_{10}$-Rest oder einen substituierten oder unsubstituierten aromatischen $C_6$-$C_{20}$-Rest stehen, und
- einem Allylderivat eines Alkalimetalls der Formel RM, in der M für ein Alkalimetall steht und R für eine Allylgruppe steht.

2. Katalytisches System nach Anspruch 1, **dadurch gekennzeichnet, dass** es sich bei dem aliphatischen Rest in der Definition von $R^1$ und $R^2$ um einen substituierten oder unsubstituierten $C_1$-$C_{10}$-Alkylrest handelt.

3. Katalytisches System nach einem der vorhergehenden Ansprüche, **dadurch gekennzeichnet, dass** es sich bei der organischen Magnesiumverbindung der Formel $R^1R^2Mg$ um n-Butylethylmagnesium oder n-Butyloctylmagnesium handelt.

4. Katalytisches System nach einem der vorhergehenden Ansprüche, **dadurch gekennzeichnet, dass** es sich in dem Allylderivat der Formel RM bei der Allylgruppe, die R definiert, um einen Oligodienylrest, vorzugsweise einen Oligobutadienylrest, handelt.

5. Katalytisches System nach einem der vorhergehenden Ansprüche, **dadurch gekennzeichnet, dass** M in dem Allylderivat der Formel RM für Lithium steht.

6. Katalytisches System nach einem der vorhergehenden Ansprüche, **dadurch gekennzeichnet, dass** es sich bei dem Neodymsalz einer organischen Phosphorsäure um ein Neodymtris(organophosphat) handelt.

7. Katalytisches System nach einem der vorhergehenden Ansprüche, **dadurch gekennzeichnet, dass** es sich bei dem Neodymsalz einer organischen Phosphorsäure um Neodymtris[bis(2-ethylhexyl)phosphat] handelt.

8. Katalytisches System nach einem der vorhergehenden Ansprüche, **dadurch gekennzeichnet, dass** das Molverhältnis (organische Magnesiumverbindung/Neodym) einen Wert von höchstens 15/1, vorzugsweise höchstens 12/1, vorzugsweise höchstens 10/1, weiter bevorzugt streng weniger als 10/1, aufweist.

9. Katalytisches System nach einem der vorhergehenden Ansprüche, **dadurch gekennzeichnet, dass** das Molverhältnis (Allylderivat eines Alkalimetalls/Neodym) einen Wert zwischen 1/2 und 20/1, vorteilhafterweise zwischen 1/1 und 10/1, vorzugsweise streng größer als 1/1 und streng kleiner als 10/1, aufweist.

10. Katalytisches System nach einem der vorhergehenden Ansprüche, **dadurch gekennzeichnet, dass** mindestens eines, mindestens zwei, mindestens drei, mindestens vier, mindestens fünf und vorzugsweise alle der folgenden Merkmale erfüllt sind:

    - bei dem Allylderivat eines Alkalimetalls handelt es sich um ein Allylderivat von Lithium,
    - bei dem Allylrest handelt es sich um einen Oligodienylrest, vorzugsweise einen Oligobutadienylrest, mit 2 bis 100 Dieneinheiten,
    - bei dem Neodymsalz handelt es sich um einen Neodymphosphorsäurediester, vorzugsweise Neodymtris[bis(2-ethylhexyl)phosphat],
    - bei der organischen Magnesiumverbindung handelt es sich um ein Dialkylmagnesium, wobei jeder der Alkylreste ein substituierter oder unsubstituierter $C_1$-$C_{10}$-Alkylrest ist, vorzugsweise n-Butylethylmagnesium oder n-Butyloctylmagnesium,
    - das Molverhältnis (organische Magnesiumverbindung/Neodym) hat einen Wert von höchstens 15/1, vorzugsweise höchstens 12/1, weiter bevorzugt höchstens 10/1, weiter bevorzugt streng weniger als 10/1,
    - das Molverhältnis (Allylderivat eines Alkalimetalls/Neodym) hat einen Wert im Bereich von 1/2 bis 20/1, vorteilhafterweise von 1/1 bis 10/1, vorzugsweise streng größer als 1/1 und streng kleiner als 10/1.

11. Verfahren zur Herstellung eines Dienpolymers, umfassend die Polymerisationsreaktion von mindestens einem konjugierten Dienmonomer in einem Reaktor in Gegenwart eines katalytischen Systems gemäß einem der vorhergehenden Ansprüche.

12. Verfahren nach Anspruch 11, umfassend, zeitlich versetzt zum Eintragen des katalytischen Polymerisationssystems in den Reaktor, die Zugabe von mindestens einer organischen Magnesiumverbindung der Formel $R^3R^4Mg$, in der $R^3$

und $R^4$ jeweils unabhängig voneinander für einen substituierten oder unsubstituierten aliphatischen $C_1$-$C_{10}$-Rest oder einen substituierten oder unsubstituierten aromatischen $C_6$-$C_{20}$-Rest stehen.

13. Verfahren nach Anspruch 12, **dadurch gekennzeichnet, dass** das Molverhältnis (organische Magnesiumverbindungen/Neodym) höchstens 15/1, vorzugsweise höchstens 12/1, vorzugsweise höchstens 10/1, weiter bevorzugt streng weniger als 10/1 beträgt, wobei die molare Menge der organischen Magnesiumverbindung die Summe der molaren Mengen der Magnesiumverbindungen $R^1R^2Mg$ und $R^3R^4Mg$ ist.

14. Verfahren nach einem der Ansprüche 11 bis 13, **dadurch gekennzeichnet, dass** es sich bei dem zu polymerisierenden konjugierten Dienmonomer um ein 1,3-Dienmonomer mit 4 bis 15 Kohlenstoffatomen, vorzugsweise 1,3-Butadien, handelt.

15. Verfahren nach einem der Ansprüche 11 bis 14, wobei mindestens eines, mindestens zwei, mindestens drei, mindestens vier, mindestens fünf, mindestens sechs und vorzugsweise alle der folgenden Merkmale erfüllt sind:

   - bei dem konjugierten Dienmonomer handelt es sich um ein 1,3-Dienmonomer mit 4 bis 15 Kohlenstoffatomen, vorzugsweise 1,3-Butadien,
   - bei dem Neodymsalz einer organischen Phosphorsäure des katalytischen Systems handelt es sich um einen Neodymphosphorsäurediester, vorzugsweise Neodymtris[bis(2-ethylhexyl)phosphat],
   - bei dem Allylderivat eines Alkalimetalls des katalytischen Systems handelt es sich um ein Oligodienyllithium, vorzugsweise ein Oligobutadienyllithium, vorzugsweise mit 2 bis 100 Butadieneinheiten,
   - bei der organischen Magnesiumverbindung der Formel $R^1R^2Mg$ des katalytischen Systems handelt es sich um ein Dialkylmagnesium, wobei jeder der Alkylreste ein substituierter oder unsubstituierter $C_1$-$C_{10}$-Alkylrest ist, vorzugsweise n-Butylethylmagnesium oder n-Butyloctylmagnesium,
   - in dem katalytischen System hat das Molverhältnis ($R^1R^2Mg$/Neodym) einen Wert von höchstens 15/1, vorzugsweise höchstens 12/1, vorzugsweise höchstens 10/1, weiter bevorzugt streng weniger als 10/1,
   - in dem katalytischen System hat das Molverhältnis (Allylderivat eines Alkalimetalls/Neodym) einen Wert von 1/1 bis 10/1, vorzugsweise streng größer als 1/1 und streng kleiner als 10/1,
   - eine organische Magnesiumverbindung $R^3R^4Mg$, in der $R^3$ und $R^4$ jeweils unabhängig voneinander für einen substituierten oder unsubstituierten aliphatischen $C_1$-$C_{10}$-Rest, einen substituierten oder unsubstituierten aromatischen $C_6$-$C_{20}$-Rest, stehen, vorzugsweise n-Butylethylmagnesium oder n-Butyloctylmagnesium, wird unabhängig von dem katalytischen System in den Reaktor gegeben, mit der Maßgabe, dass das Molverhältnis (organische Magnesiumverbindungen/Neodym) höchstens 15/1, vorzugsweise höchstens 12/1, vorzugsweise höchstens 10/1, weiter bevorzugt streng weniger als 10/1 beträgt, wobei die molare Menge der organischen Magnesiumverbindungen die Summe der molaren Mengen der Magnesiumverbindungen $R^1R^2Mg$ und $R^3R^4Mg$ ist.

## Claims

1. **Catalytic system** based on at least:

   • a salt of an organic phosphoric acid of neodymium,
   • an organic magnesium compound of formula $R_1R_2Mg$, where each of $R_1$ and $R_2$ independently represents an aliphatic radical in $C_1$-$C_{10}$, substituted or not, or an aromatic radical in $C_6$-$C_{20}$, substituted or not, and
   • an allylic derivative of an alkali metal of formula RM, where M denotes an alkali metal and R represents an allylic group.

2. **Catalytic system** according to claim 1, **characterized in that** the aliphatic radical in the definition of $R_1$ and $R_2$ is an alkyl radical in $C_1$-$C_{10}$, substituted or not.

3. **Catalytic system** according to any of the preceding claims, **characterized in that** the organic magnesium compound of formula $R_1R_2Mg$ is n-butylethylmagnesium or n-butyl-octylmagnesium.

4. **Catalytic system** according to any of the preceding claims, **characterized in that** in the allylic derivative of formula RM, the allylic group defining R is an oligodienyl radical, preferably an oligobutadienyl radical.

5. **Catalytic system** according to any of the preceding claims, **characterized in that** in the allylic derivative of formula RM, M denotes lithium.

6. **Catalytic system** according to any of the preceding claims, **characterized in that** the salt of an organic phosphoric acid of neodymium is a tris(organophosphate) of neodymium.

7. **Catalytic system** according to any of the preceding claims, **characterized in that** the salt of an organic phosphoric acid of neodymium is tris [bis (2-ethylhexyl) phosphate] of neodymium.

8. **Catalytic system** according to any of the preceding claims, **characterized in that** the molar ratio (organic magnesium compound / neodymium) has a value of at most 15/1, preferably at most 12/1, preferably at most 10/1, preferably strictly less than 10/1.

9. **Catalytic system** according to any of the preceding claims, **characterized in that** the molar ratio (allylic derivative of an alkali metal / neodymium) has a value between 1/2 and 20/1, advantageously ranging from 1/1 to 10/1, preferably strictly greater than 1/1 and strictly less than 10/1.

10. **Catalytic system** according to any of the preceding claims, **characterized in that** at least one of the following characteristics is respected, at least two, at least three, at least four, at least five and preferably all:

    • the allylic derivative of an alkali metal is an allylic derivative of lithium,
    • the allylic radical is an oligodienyl radical, preferably an oligobutadienyl, having 2 to 100 units derived from diene,
    • the neodymium salt is a diester of phosphoric acid of neodymium, preferably tris [bis (2-ethylhexyl) phosphate] of neodymium,
    • the organic magnesium compound is a dialkylmagnesium, each of the alkyl radicals being in $C_1$-$C_{10}$, substituted or not, preferably n-butylethylmagnesium or n-butyl-octylmagnesium,
    • the molar ratio (organic magnesium compound / neodymium) has a value of at most 15/1, preferably at most 12/1, preferably at most 10/1, preferably strictly less than 10/1,
    • the molar ratio (allylic derivative of an alkali metal / neodymium) has a value ranging from 1/2 to 20/1, advantageously from 1/1 to 10/1, preferably strictly greater than 1/1 and strictly less than 10/1.

11. **Process for preparing a diene polymer** comprising the polymerization reaction of at least one conjugated diene monomer in a reactor in the presence of a catalytic system as defined in any of the preceding claims.

12. **Process** according to claim 11 comprising, staggered to the introduction of the polymerization catalytic system into the reactor, the addition into the reactor of at least one organic magnesium compound of formula $R^3R^4Mg$, where each of R3 and R4 independently represents an aliphatic radical in $C_1$-$C_{10}$, substituted or not, or an aromatic radical in $C_6$-$C_{20}$, substituted or not.

13. **Process** according to claim 12 **characterized in that** the molar ratio (organic magnesium compounds / neodymium) is at most 15/1, preferably at most 12/1, preferably at most 10/1, preferably strictly less than 10/1, the molar quantity of organic magnesium compound being the sum of the molar quantities of magnesium compounds $R_1R_2Mg$ and $R^3R^4Mg$.

14. **Process** according to any of claims 11 to 13 **characterized in that** the conjugated diene monomer to be polymerized is a 1,3-diene monomer having 4 to 15 carbon atoms, preferably 1,3-butadiene.

15. **Process** according to any of claims 11 to 14 in which at least one of the following characteristics is respected, at least two, at least three, at least four, at least five, at least six and preferably all:

    • the conjugated diene monomer is a 1,3-diene monomer having 4 to 15 carbon atoms, preferably 1,3-butadiene,
    • the neodymium salt of the catalytic system is a diester of phosphoric acid of neodymium, preferably tris [bis (2-ethylhexyl) phosphate] of neodymium,
    • the allylic derivative of an alkali metal of the catalytic system is an oligodienyllithium, preferably an oligobutadienyllithium, preferably having 2 to 100 units derived from butadiene,
    • the organic magnesium compound of formula $R_1R_2Mg$ of the catalytic system is a dialkylmagnesium, each of the alkyl radicals being in C1-C10, substituted or not, preferably n-butylethylmagnesium or n-butyl-octylmagnesium,
    • in the catalytic system the molar ratio ($R_1R_2Mg$ / neodymium) has a value of at most 15/1, preferably at most 12/1, preferably at most 10/1, preferably strictly less than 10/1,

- in the catalytic system the molar ratio (allylic derivative of an alkali metal / neodymium) has a value ranging from 1/1 to 10/1, preferably strictly greater than 1/1 and strictly less than 10/1,
- an organic magnesium compound $R_3R_4Mg$, where each of $R_3$ and $R_4$ independently represents an aliphatic radical in $C_1$-$C_{10}$, substituted or not, an aromatic radical in $C_6$-$C_{20}$, substituted or not, preferably n-butylethylmagnesium or n-butyl-octylmagnesium, is added into the reactor independently of the catalytic system, provided that the molar ratio (organic magnesium compounds / neodymium) is at most 15/1, preferably at most 12/1, preferably at most 10/1, preferably strictly less than 10/1, the molar quantity of organic magnesium compounds being the sum of the molar quantities of magnesium compounds $R_1R_2Mg$ and $R^3R^4Mg$.

**RÉFÉRENCES CITÉES DANS LA DESCRIPTION**

**Documents brevets cités dans la description**

- EP 0091287 A

**Littérature non-brevet citée dans la description**

- *Macromolecules*, 2017, vol. 50, 7887-7894
- **FANNY BONNET**. Highly trans-Stereospecific Isoprene Polymerization by Neodymium Borohydrido Catalysts. *Macromolecules*, 2005, vol. 38, 3162-3169
- **ZHANG Q.** *Polymer International*, 2002, vol. 51, 208-212
- **VILMIN, F** ; **DUSSAP, C.** ; **COSTE, N.** *Applied Spectroscopy*, 2006, vol. 60, 619-29